# EUROPEAN PATENT SPECIFICATION

(11) **EP 4 081 415 B1**
(45) Date of publication and mention of the grant of the patent: **13.12.2023**
(21) Application number: 20839333.0
(22) Date of filing: 23.12.2020
(51) Int. Cl.: B60G 17/017, B62D 55/065, B60P 3/41, B62D 55/104, B62D 55/116, G01G 19/08

(54) **LOAD WEIGHING ARRANGEMENT**
LASTWIEGEANORDNUNG
AGENCEMENT DE PESÉE DE CHARGE

(30) Priority: 27.12.2019 SE 1951557
(43) Date of publication of application: 02.11.2022
(73) Proprietor: Komatsu Forest AB, 907 04 Umeå (SE)
(72) Inventor: PETTERSSON, Henry, 907 04 Umeå (SE)
(74) Representative: AWA Sweden AB
(86) International application number: PCT/EP2020/087841
(87) International publication number: WO 2021/130351

(56) References cited:
- EP-A1- 3 059 202
- WO-A1-2012/101325
- WO-A1-2018/169468
- GB-A- 1 139 090
- US-A- 5 662 357
- US-A- 5 986 220

## Description

### Field of the invention

The present invention relates to an arrangement for determining the load on a vehicle.

### Technical background

Different types of vehicles are frequently used within a lot of areas to carry different types of loads. One example is within the forest industry where powerful vehicles are used for harvesting and transports of cut down trees from the forest.

To prevent equipment failure, vehicles from braking and ensure a safe working place it is essential to determine loads the equipment is exposed to as well as the weight loaded on the vehicle.

Within the forest industry the weight of the load has been determined by weighing the logs loaded on the vehicle by weight determining equipment arranged in the gripping means that are used lift and load the logs on the vehicle. However, there is a desire to determine the weight of the load, for example the loaded logs, with higher accuracy.

For example, prior art document US 5 986 220 A discloses a deadweight calculating apparatus including a deadweight calculating section for calculating deadweight of a vehicle. Prior art document WO2018/169468 A1 discloses a vehicle according to the preamble of claim 1.

### Summary

To better address one or more of these concerns a vehicle comprising an arrangement for determining the weight of load on the vehicle according to claim 1 is presented, as well as a method for determining the weight of load on a vehicle. Preferred embodiments of the vehicle and method are defined in the dependent claims.

The vehicle according to the invention comprises:
a vehicle body;
at least two ground support assemblies arranged to support said vehicle body, each ground support assembly comprises a support beam arranged to support at least two wheels, or track road wheels, at least one sprocket and an endless track arranged around the track road wheels and the sprocket;
a suspension device for suspension of each of said ground support assemblies to said vehicle body, said suspension device is arranged to allow a movement of the ground support assembly relative to the vehicle body in a substantially vertical plane extending in the longitudinal direction of said ground support assembly; and
a control unit,
wherein said suspension device comprises
   at least a front and rear movable arm connecting each of the ground support assemblies to the vehicle body, and
   sensors arranged to determine the loads on the front and rear movable arm and forward the information to the control unit where the weight of the vehicle load is determined based on the information from the sensors

The vehicle according to the invention comprising the new arrangement for determining the total weight loaded on the vehicle has several advantages. First, the sensors can continuously determine the weight arranged on the vehicle as the work progresses. Secondly, the use of sensors arranged to determine the loads on the suspension device makes it possible to determine the total weight arranged on the vehicle with higher accuracy than with previous systems since the measures take place on the suspension device that is carrying the weight of the vehicle. The definition *ground support assemblies* are intended to cover configurations involving either endless tracks or wheels since the arrangement according to the invention could be used both configurations since the load is measured on the suspension device.

According to the invention, the suspension device comprises at least a front and rear movable arm connecting each of the ground support assemblies to the vehicle body and the sensors are arranged to determine the loads on the front and rear movable arm and forward the information to the control unit. This embodiment provides an efficient suspension of the track assemblies in combination with a reliable and precise weight determining.

In one embodiment of the vehicle, the suspension device comprises means for hydraulically, or electrically, operate the front and/or rear arm to control the position of the ground support assemblies in the vertical plane in relation to the vehicle body.

In one embodiment of the vehicle, the suspension device comprises hydraulically powered cylinders arranged to control the front and/or rear arm to adjust the vertical position of the ground support assemblies and said sensors are pressure sensors arranged to measure the hydraulic pressure in the cylinders to determine the total weight of the load on the vehicle. Hydraulically powered suspension has several well-known advantages and pressure sensors arranged to measure the pressure in the cylinders will provide information with high accuracy to the control unit.

In one embodiment of the vehicle, the sensors are sensors arranged to measure the tension in the front and rear arm to determine the total weight of the load on the vehicle.

In one embodiment of the vehicle, the front and rear arm are turnably connected to the vehicle body and the support beam to allow the ground support assembly to move in the vertical plane and at least one of the front and rear arms has an adjustable length to allow the ground support assembly to move in different angles in relation to the vehicle body.

In one embodiment of the vehicle, said sensors are arranged to measure the momentum in the turnable connection of the front and rear arm to the vehicle body or the support beam to determine the total weight of the load on the vehicle. This is an alternative configuration and the sensors can provide information with high accuracy to the control unit.

In one embodiment of the vehicle, the suspension device comprises one, or more, movable intermediate arm arranged between the front and rear arm and connecting the ground support assembly to the vehicle body, wherein further sensors are arranged to determine the loads on one or more intermediate arms and forward the information to the control unit to determine the weight of the load arranged on the vehicle. This embodiment is favourable if a higher load capacity is desired since the further intermediate arms could be added. The intermediate arms have similar configuration as the front and rear arm.

In one embodiment of the vehicle, the suspension device comprises hydraulically powered cylinders arranged to control the intermediate arm, or arms, to adjust the vertical position of the ground support assembly and said sensors are pressure sensors arranged to measure the hydraulic pressure in the cylinders. If further arms are added each hydraulic cylinder could be provided with sensors to ensure the desired accuracy of the determined weight.

The invention furthermore relates to a method for determining the weight of load arranged on the vehicle defined above. The method comprises the steps:
a. determine a reference value for the information from the sensors before any load is arranged on the vehicle;
b. measure the load on the respective ground support assembly using the sensors and forwarding the information to the control unit that calculates the total load of the load arranged on the vehicle; and
c. repeat step b. at selected time intervals to update the total load.

One embodiment of the method furthermore comprises the step:
d. comparing the determined total load to a predetermined maximum load value and send alert if the predetermined maximum load is exceeded.

One embodiment of the method furthermore comprises the step:
e. comparing the determined total weight to a predetermined reference value and calibrate the allowed speed for the vehicle based on the determined weight.

One embodiment of the method furthermore comprises the step:
f. determine the conditions of the surrounding ground and calibrate the allowed speed for the vehicle based

### Brief description of the drawings

The invention will be better understood through the following illustrative and non-limiting detailed description of preferred embodiments, with reference to the appended drawings, in which:
Figure 1 illustrates a perspective view of a vehicle.
Figure 2 illustrates selected parts of the vehicle in perspective.
Figure 3 illustrates selected parts of the vehicle in perspective.
Figure 4a illustrates one of the ground support assemblies and the suspension device in perspective.
Figure 4b illustrates a schematic illustration of the suspension device.
Figure 5 illustrates a perspective view of selected elements of a second embodiment of the vehicle.
Figure 6 illustrates a schematic top view of selected parts of a third embodiment of the vehicle.
Figure 7 illustrates schematically the different steps of the method according to the invention.

All figures are schematic, not necessarily to scale, and generally only show parts which are necessary to elucidate the invention, wherein other parts may be omitted or merely suggested.

### Detailed description of embodiments

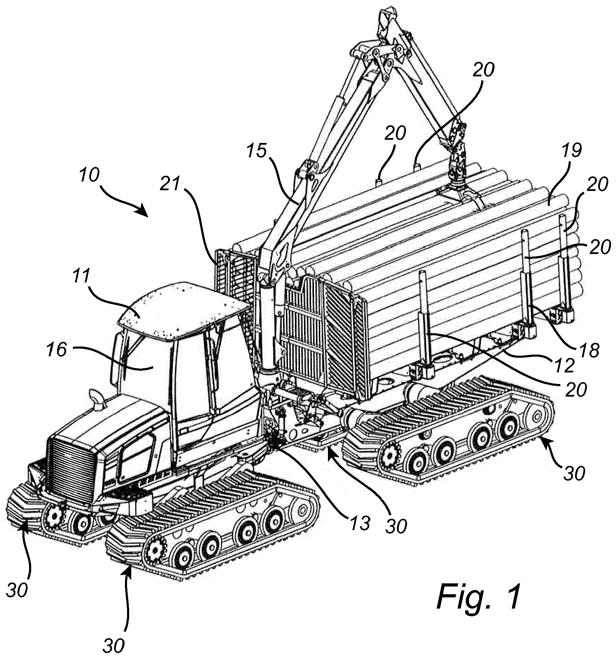

In figure 1 a perspective view of an example of a vehicle 10 according to the invention is illustrated. The vehicle is intended for work within forest areas and comprises a front 11 and rear 12 vehicle body unit connected to each other by a pivotable coupling 13 such that the angular position between the front 11 and rear 12 vehicle body unit could be changed to steer the vehicle during use. The claimed arrangement could however be used for a number of different vehicles intended to carry different types of loads.

Both the front 11 and rear 12 vehicle body unit comprises one ground support assembly 30 arranged on each side of the vehicle body unit to support the vehicle body unit and power the vehicle during driving. The claimed invention could also be used in vehicles with other configuration like for example with only one vehicle body supported by ground support assemblies. The two pairs of ground support assemblies have substantially the same configuration even though the dimensions and size of the different parts of the track assemblies could be adapted to the specific needs of the respective vehicle unit and this description is drafted to described one ground support assembly in detail.

In the front vehicle body unit 11, a combustion engine, and thereto related systems, are arranged to power the vehicle during driving, as well as the different functions within the vehicle such as for example a crane 15 for handling logs etc. The combustion engine is arranged to power a hydraulic system for driving the vehicle and the crane 15 for lifting logs etc. The combustion engine is also arranged to support an electrical system and charging of batteries arranged to ensure power supply to the different electrical functions and systems in the vehicle. The combustion engine could also be replaced by an electrical configuration and a larger battery capacity to power the different functions of the vehicle.

Furthermore, the front vehicle body unit 11 comprises a cabin 16 for one, or more, operators of the vehicle. Within the cabin the required user interfaces for the vehicle and the systems and tools arranged on the vehicle are arranged. The cabin is adapted to the intended use of the vehicle and could comprises heating, cooling, seats etc. for the operator comfort.

The rear vehicle body 12 unit is adapted for the intended work within the forest area and comprises a storage area 18 for logs and the crane 15 for loading and / or unloading logs 19 from the vehicle 10. The storage area 18 is formed by six log support posts 20, also referred to as bunks, arranged along the sides of vehicle body unit 12 to form the storage area 18 for logs between the two rows of log support posts 20. The number of posts or bunks could however be modified depending on the intended load. In the front end of the storage area 18 a log support gate 21 is arranged transverse to the longitudinal direction of the support area to provide a front ending of the storage area 18. The support gate 21 facilitates the loading of logs and prevent that the logs are arranged to close to the crane 15 and the front vehicle body unit 11 which could affect the functionality of the crane and reduce the possibility to manoeuvre the vehicle. The logs are arranged substantially parallel to the longitudinal direction of the vehicle within the storage area. The storage area could however be modified in different ways to optimize the storage area for different purposes like for example storage of the logs transverse to the longitudinal direction of the vehicle or dividing the storage area into two, or more, smaller compartments arranged along the rear vehicle body unit.

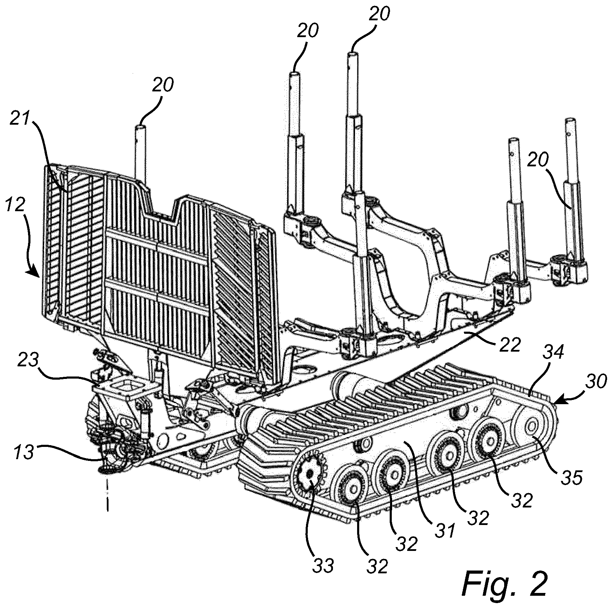

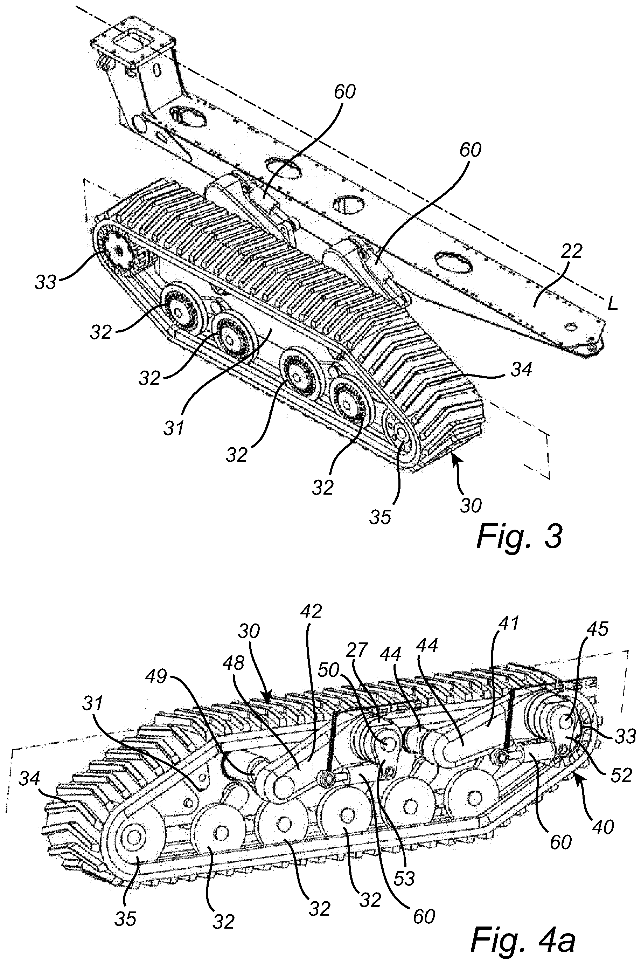

The rear vehicle body unit 12, illustrated more in detail in figure 2 and 3, comprises an elongated central support beam 22 extending from the pivotable coupling 13 all the way to the rear end of the vehicle body unit 12. The elongated central support beam 22 is the load bearing structure, i.e. the vehicle chassis, that support the different parts and systems within the rear vehicle unit 12 such as for example the crane 15 fitted to a crane post 23 in the front end of the central support beam 22.

The rear vehicle body unit 12 comprises one ground support assembly 30, i.e. in this embodiment a track assembly, on each side of the central support beam 22 arranged to support the vehicle body unit 12. The number of ground support assemblies could however be increased if a longer rear vehicle body unit is desired. Each track assembly comprises an elongated support beam 31 extending substantially parallel to the longitudinal direction L of the rear vehicle body unit 12. The support beam 31 is arranged to support a number of track road wheels 32 and at least one sprocket33 arranged to drive an endless track 34 extending around the track road wheels and the sprocket. The track road wheels 32 are resiliently fitted to the support beam 31 to provide a smooth interaction with the ground and reduce the impact on the ground. The track road wheels also guide and maintain the endless track in the intended position. The sprocket 33 is arranged in the front end of the support beam 31 to drive the endless track 34 and move the vehicle 10 forwards or backwards. However, the sprocket could also be arranged in the rear end of the support beam. In the illustrated embodiment, the track assembly comprises one set of identical sprocket, track road wheels and idler wheel one each side of the track support beam to provide a reliable support of the endless track. The sprocket is hydraulically driven by a hydraulic motor, not illustrated, arranged in the track assembly 30. Pressurized hydraulic oil is supplied via pipes extending from the front vehicle body 11 unit via the hollow elongated support beam to the track assemblies 30. The endless track 34 could be embodied in different ways to adapt the track to different characteristics of the ground and the intended driving speed of the vehicle. The endless tracks could be made of a rubber composition or metal elements linked together to form the endless track 34. Furthermore, a track tensioning element 35, also referred to as idler, is arranged in the rear end of the support beam to maintain the desired tension in the endless track. The track tensioning element 35 is embodied as an in the longitudinal direction resiliently supported wheel that can adjust the tension in the endless track.

Each ground support assembly 30 is fitted to the central support beam 22 by a suspension device 40. The suspension device is designed to allow a movement of the track assembly 30 relative to the vehicle bodies 11, 12 in a substantially vertical plane extending in the longitudinal direction L of the rear vehicle body unit 12 and the track assembly 30 parallel to the rear vehicle body unit 12 such that the vehicle body could be maintained in a substantially horizontal orientation even though the ground is inclined or undulating.

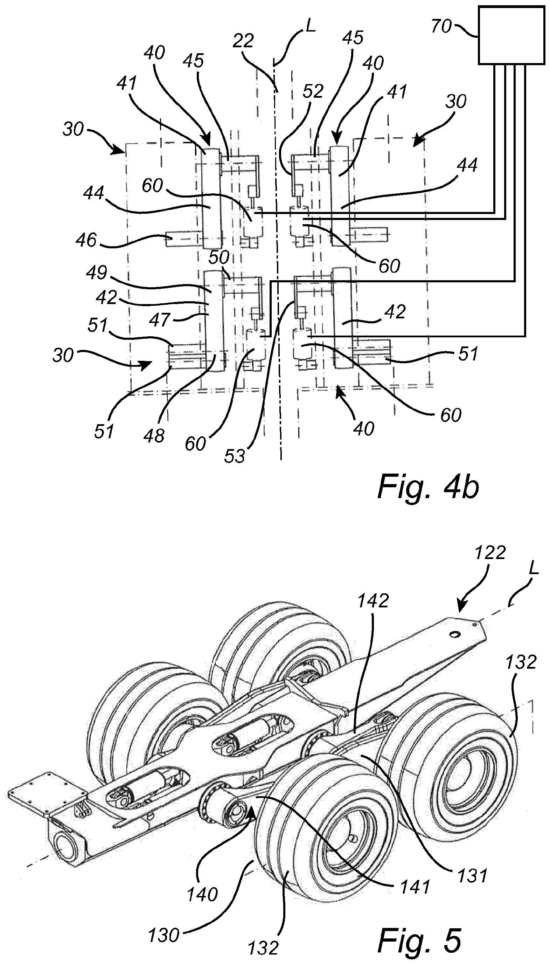

The suspension device 40 for each ground support assembly 30 comprises a front 41 and a rear 42 movable pendulum arm connecting the ground support assembly 30 to the vehicle body unit. The front 41 and rear 42 arm are turnably connected to the vehicle body central support beam 22 and the support beam 31 to allow the ground support assembly 30 to move in the vertical plane. The front 41 and rear 42 arm are both turnable around axes transverse to the longitudinal direction L of the vehicle and the ground support assembly, illustrated schematically in figure 4b.

The front arm has an elongated straight arm section 44 intended to extend in a plane substantially parallel to the ground support assembly 30 plane of movement. In the end of the elongated arm section 44 that is intended to be turnable fitted to the central support beam 22 and attachment element 45 is extending in a direction substantially transverse from the arm section 44 towards the central support beam 22, and in the opposite end of the arm section 44 a similar attachment element 46 is extending transverse to the arm section 44 towards the support beam 31. In both the central support beam 22 and support beam 31 of the ground support assembly the attachment elements 45, 46 are fitted via suitable bearing to provide a reliable and robust fitting for a long period of time.

The rear arm 42 have a similar configuration as the front arm but the elongated arm section 47 is divided into a first 48 and a second arm segment 49 movably connected to each other to make it possible to adjust the length of the elongated arm section 47 by adjusting the position of the two arm segments 48, 49 in relation to each other. The possibility to adjust the length of the arm section 47 is important for the movement of the ground support assembly 30 in relation to the vehicle body, and necessary to allow the ground support assembly 30 to move free in the vertical plane and reach angled positions in relation to the vehicle body unit 12. In the end of the first arm segment 48 that is intended to be turnable fitted to the central support beam 22 an attachment element 50 is extending in a direction substantially transverse form the first arm segment 48 towards the central support beam 22, and in the opposite end of the elongated arm section, i.e. the second arm segment 49, a similar attachment element 51 is extending transverse to the first 48 and second arm segment 49 towards the support beam 31. In both the central support beam 22 and support beam 31 of the ground support assembly the attachment elements 50, 51 are fitted via suitable bearing to provide a reliable and robust fitting for a long period of time. In an alternative configuration the front arm could be embodied with the adjustable length while the rear arm has the fixed length, alternatively both arms have an adjustable length. i.e. comprises two arm segments, to allow the track assembly to move in different angles in relation to the vehicle body.

The suspension device 40 furthermore comprises means to hydraulically, or electrically, operate the front 41 and rear 42 arm to control the position of the track assemblies 30 in the vertical plane in relation to the vehicle body unit 12.

In the illustrated embodiment of the vehicle, figure 4a and 4b, hydraulic cylinders 60 are arranged to control the movement of the front 41 and rear 42 arm. The cylinders are arranged to control the front 41 and rear 42 arm in the area where the arms are connected to the central support beam 22 and one end of the hydraulic cylinders 60 is secured to the central support beam 22. The moving part of the hydraulic cylinders 60 are connected to the attachment elements 45, 50 that are fitted to the central support beam 22 of the rear vehicle body unit 12 via substantially identical coupling elements 52, 53 extending parallel to the longitudinal direction L in order to be able to transfer the momentum from the cylinders required to control the movement of the front 41 and rear 42 arm. Preferably, the suspension device comprises a corresponding arrangement to control the second arm segment 49 position in relation to the first arm segment 48 to provide the desired accurate and precise control of the track assemblies. This arrangement comprises a hydraulic cylinder connected via a coupling element to the attachment element 51 of the second arm segment 50 but is not illustrated in the schematic illustration. The suspension device of each ground support assembly of the vehicle has a similar configuration.

In the embodiment of the ground support assembly illustrated in figure 4a the hydraulic cylinders 60 are arranged outside the central support beam 22 and the support beam 31. A favourable second embodiment of the arrangement of the hydraulic cylinders are illustrated in figure 5 where the cylinders are arranged protected inside the central support beam. The hydraulic cylinders extend substantially parallel to the longitudinal axis L which makes it possible to fit them inside the central support beam. In this embodiment the moving part of the attachment elements 45, 50 extend through the central support beam and the hydraulic cylinders 60 connected to coupling elements 52, 53 arranged inside the central support beam 22. The same solution is preferably used in the opposite end of the rear arm 42 such that the hydraulic cylinder controlling the second arm segment is arranged within the support beam 31.

The possibility to control the movement of the front 41 and rear 42 arm is essential to make it possible to adapt the position of the ground support assembly 30 to the ground conditions, i.e. inclination and undulations, to maintain the vehicle body in the desired substantially horizontal position.

The hydraulic system, or electrical system, is controlled by a control unit 70 arranged to control the different functions of the vehicle. The control unit is configured to receive information from different sensors and equipment in the vehicle. Examples of information provided to the control unit is the angular orientation of the vehicle body and the speed the vehicle is moving in. The collected information is used to determine how to operate the suspension device to ensure and maintain the desired horizontal orientation of the vehicle body units. Further parameters could of course also be used to optimize the operation of the vehicle.

In figure 5 an alternative embodiment of the rear vehicle body unit is illustrated. The vehicle and different aspects of the vehicle have been described in detail above with reference to the first embodiment of the vehicle comprising ground support assemblies 30 in the form of track assemblies to support the vehicle body. However, the vehicle according to the invention could also be configured with ground support assemblies 130 comprising two or more wheels 132 fitted to the support beam 131 and selected parts of this embodiment of the vehicle is illustrated in perspective in figure 5. The ground support assemblies illustrated 130 is supported by the same configuration of the suspension device 140 as the track assembly embodiment described above but the endless track, the track road wheels, the track tensioning element and the sprocket have been replaced by two wheels 132 fitted to the support beam 131. This embodiment is favourable if the vehicle is intended for driving mostly on roads or flat ground rather than in undulating rough areas.

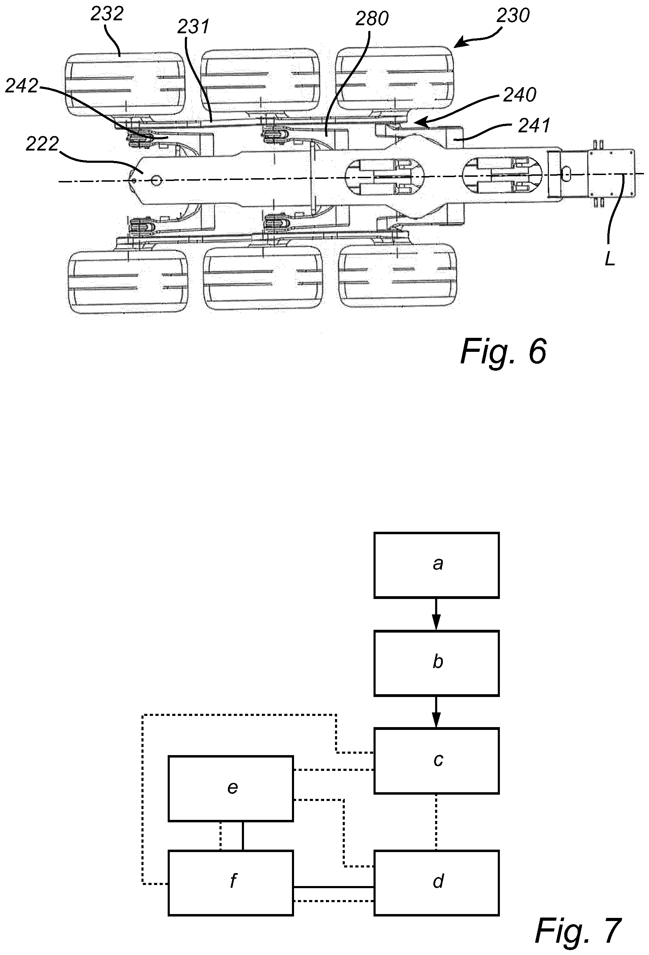

In figure 6 selected parts of a third embodiment of the vehicle is illustrated. This vehicle has ground support assemblies 230 comprising three wheels 232 fitted to an extended support beam 231. This embodiment of the ground support assemblies 130 has all the essential part as the embodiment described above but to handle higher loads the suspension device 240 comprises an additional intermediate arm 280 arranged between the front 241 and rear arm 242 to provide additional support between the vehicle body unit and the support beam 231 to increase the load capacity of the vehicle. The intermediate arm 280 is turnably fitted to the support beam 231 of the rear vehicle body unit and the support beam of the ground support assembly and has the same configuration as the rear arm 42, i.e. an adjustable arm length. The intermediate arm is operated by the same control unit.

Further intermediate arms could be added, and the support beam extended further if a long vehicle is desired and / or if a large load capacity is desired. The additional intermediate arms have the same configurations. The vehicle according to the invention furthermore comprises sensors arranged to determine the loads on the front 41 and rear 42 movable arm on each side of the vehicle and use the determined information to calculate the weight of the logs arranged on the vehicle. If the vehicle comprises one or more intermediate arms 280, the same type of sensors is arranged on these arms as well to provide measurement information to the control unit to determine the total weight of the load.

The sensors are arranged in the suspension devices 40 of the ground support assemblies to measure the loads on the respective suspension device. The information is forwarded to the control unit 70 where the weight of the vehicle load is determined based on the information from the sensors.

Depending on if the vehicle comprises a hydraulic or electric system to power the suspension device the type of sensors is either pressure sensors arranged to measure the hydraulic pressure in the cylinders 60 of the suspension device arranged to control the front 41 and rear 42 arms, and eventual intermediate arms 280. The control unit is configured to calculate the total weight of the load based on information from the respective sensors in the cylinders. The calculations are adapted to the specific design of the hydraulic cylinders 60, the length of the attachment elements 45, 50 and the angular positions of the cylinders and the attachment elements since these parameters are changing during driving.

If the vehicle comprises an electric system for powering the suspension device, the sensors are arranged to measure the tension in the front and rear arms, and eventual intermediate arms 280, alternatively the momentum in the connection of the front and rear arm, and eventual intermediate arms, to the central support beam or support beam of the ground support assemblies The information from the sensors is transferred to the control unit 70 where calculations are conducted to determine the total weight of the load on the vehicle.

The claimed invention also involves a method for determining the weight of load on the vehicle. The method is schematically illustrated in figure 7 and comprises the steps:
determine a reference value for the information from the sensors before any load is arranged on the vehicle (step a) to generate a reference value before the vehicle is used for the intended work;
measure the load on the ground support assemblies using the sensors on the different arms connecting the ground support assemblies to the vehicle body and forwarding the information to the control unit that calculates the total weight of the load arranged on the vehicle (step b); and
repeat the previous step at selected time intervals to update the total weight of the load (step c).

Further features and steps could be added to the method such as for example the step of comparing the determined total weight of the load to a predetermined maximum load weight value that is accepted for the particular type of vehicle and send alert if the predetermined maximum load weight value is exceeded (step d) to avoid damages to the different parts or structures of the vehicle that could potentially also affect the safety of the operator or surrounding equipment or personnel.

The determined total weight could also be compared with a predetermined reference value to calibrate the allowed speed for the vehicle based on the determined weight to adapt the speed of the vehicle to the actual load on the vehicle to increase the efficiency of the work conducted.

Furthermore, the conditions of the surrounding ground could be determined, either by sensors, cameras or manually, and the allowed speed for the vehicle adjusted based on the determined weight and the conditions of the surrounding ground to increase safety and efficiency of the work conducted.

While the invention has been illustrated and described in detail in the drawings and foregoing description, such illustration and description are to be considered illustrative or exemplary and not restrictive; the invention is not limited to the disclosed embodiments. The skilled person understands that many modifications, variations and alterations are conceivable within the scope as defined in the appended claims.

Additionally, variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage, as long as this combination is covered by the appended claims.

Any reference signs in the claims should not be construed as limiting the scope of the claims.

## Claims

1. Vehicle (10) comprising an arrangement for determining the weight of load on the vehicle, said vehicle (10) comprising:
a vehicle body (11, 12);
at least two ground support assemblies (30; 130; 230) arranged to support said vehicle body (11, 12), each ground support assembly comprises a support beam (31; 131; 231) arranged to support at least two wheels (132; 232), or track road wheels (32), at least one sprocket (33) and an endless track (34) arranged around the track road wheels (32) and the sprocket (33);
a suspension device (40; 140; 240) for suspension of each of said ground support assemblies (30; 130; 230) to said vehicle body (11, 12), said suspension device (40; 140; 240) is arranged to allow a movement of the ground support assembly (30; 130; 230) relative to the vehicle body (11, 12) in a substantially vertical plane extending in the longitudinal direction of said ground support assembly (30; 130; 230); the vehicle being **characterised by** further comprising
a control unit (70),
wherein said suspension device (40; 140; 240) comprises
at least a front (41) and rear (42) movable arm connecting each of the ground support assemblies (30; 130; 230) to the vehicle body (11, 12), and
sensors arranged to determine the loads on the front (41; 141; 241) and rear (42; 142; 242) movable arm and forward the information to the control unit (70) where the weight of the vehicle load is determined based on the information from the sensors.

2. Vehicle (10) according to claim 1, wherein the suspension device (40; 140; 240) comprises means (60) for hydraulically, or electrically, operate the front (41; 141: 241) and/or rear (42; 142; 242) arm to control the position of the ground support assemblies (30; 130; 230) in the vertical plane in relation to the vehicle body (11, 12).

3. Vehicle (10) according to claim 2, wherein the suspension device (40; 140; 240) comprises hydraulically powered cylinders (60) arranged to control the front (41; 141; 241) and/or rear (42; 142; 242) arm to adjust the vertical position of the ground support assemblies (30; 130; 230) and said sensors are pressure sensors arranged to measure the hydraulic pressure in the cylinders (60) to determine the total weight of the load on the vehicle.

4. Vehicle (10) according to claim 2, wherein said sensors are sensors arranged to measure the tension in the front (41; 141; 241) and rear (42; 142; 242) arm to determine the total weight of the load on the vehicle.

5. Vehicle (10) according to anyone of the previous claims, wherein the front (41; 141; 241) and rear (42; 142, 242) arm are turnably connected to the vehicle body (11, 12) and the support beam (31, 131; 232) to allow the ground support assembly (30; 130; 230) to move in the vertical plane and at least one of the front (41; 141; 241) and rear (42; 142; 242) arm has an adjustable length to allow the ground support assembly (30; 130; 230) to move in different angles in relation to the vehicle body (11, 12).

6. Vehicle (10) according to claim 5, wherein said sensors are arranged to measure the momentum in the turnable connection of the front (41; 141; 241) and rear (42; 142; 242) arm to the vehicle body (11, 12) or the support beam (31; 131; 231) to determine the total weight of the load on the vehicle.

7. Vehicle (10) according to anyone of the claim 1 - 5, wherein the suspension device (240) comprises one, or more, movable intermediate arms (280) arranged between the front (241) and rear arm (242) and connecting the ground support assembly (240) to the vehicle body (11, 12), wherein further sensors are arranged to determine the loads on the one or more intermediate arms (280) and forward the information to the control unit (70) to determine the weight of the load arranged on the vehicle (10).

8. Vehicle (10) according to claim 7, wherein the suspension device comprises hydraulically powered cylinders arranged to control the intermediate arm (280), or arms, to adjust the vertical position of the ground support assembly (240) and said sensors are pressure sensors arranged to measure the hydraulic pressure in the cylinders.

9. Method for determining the weight of load on the vehicle (10) according to claim 1, wherein said method comprises the steps:
a. determine a reference value for the information from the sensors before any load is arranged on the vehicle;
b. measure the load on the respective ground support assembly (30; 130; 230) using the sensors and forwarding the information to the control unit (70) that calculates the total weight of the load arranged on the vehicle; and
c. repeat step b. at selected time intervals to update the total weight.

10. Method according to claim 9, further comprising step:
d. comparing the determined total weight to a predetermined maximum weight value and send alert if the predetermined maximum weight is exceeded.

11. Method according to claim 9 or 10, further comprising step:
e. comparing the determined total weight to a predetermined reference value and calibrate the allowed speed for the vehicle based on the determined weight.

12. Method according to claim 9, 10, or 11, further comprising step:
f. Determine the conditions of the surrounding ground and calibrate the allowed speed for the vehicle based on the determined weight and the conditions of the surrounding ground.

## Patentansprüche

1. Fahrzeug (10), umfassend eine Anordnung zum Bestimmen des Gewichts einer Last auf dem Fahrzeug, wobei das Fahrzeug (10) umfasst:
einen Fahrzeugaufbau (11, 12);
mindestens zwei Bodentraganordnungen (30; 130; 230), die angeordnet sind, um den Fahrzeugaufbau (11, 12) zu tragen, wobei jede Bodentraganordnung einen Tragbalken (31; 131; 231) umfasst, der angeordnet ist, um mindestens zwei Räder (132; 232) oder Kettenlaufräder (32), mindestens ein Kettenrad (33) und eine Endloslaufbahn (34) zu tragen, die um die Kettenlaufräder (32) und das Kettenrad (33) angeordnet ist;
eine Aufhängungsvorrichtung (40; 140; 240) zur Aufhängung jeder der Bodentraganordnungen (30; 130; 230) an dem Fahrzeugaufbau (11, 12),
wobei die Aufhängungsvorrichtung (40; 140; 240) angeordnet ist, um eine Bewegung der Bodentraganordnung (30; 130; 230) relativ zu dem Fahrzeugaufbau (11, 12) in einer im Wesentlichen vertikalen Ebene zu ermöglichen, die sich in der Längsrichtung der Bodentraganordnung (30; 130; 230) erstreckt;
wobei das Fahrzeug **dadurch gekennzeichnet ist, dass** es ferner umfasst:
eine Steuereinheit (70),
wobei die Aufhängungsvorrichtung (40; 140, 240) umfasst:
mindestens einen vorderen (41) und einen hinteren (42) beweglichen Arm, die jede der Bodentraganordnungen (30; 130; 230) mit dem Fahrzeugaufbau (11, 12) verbinden, und
Sensoren, die angeordnet sind, um die Lasten auf dem vorderen (41; 141; 241) und dem hinteren (42; 142; 242) beweglichen Arm zu bestimmen und die Informationen an die Steuereinheit (70) weiterzuleiten, wo das Gewicht der Fahrzeuglast basierend auf den Informationen von den Sensoren bestimmt wird.

2. Fahrzeug (10) nach Anspruch 1, wobei die Aufhängungsvorrichtung (40; 140; 240) Mittel (60) zur hydraulischen oder elektrischen Betätigung des vorderen (41; 141; 241) und/oder des hinteren (42; 142; 242) Arms umfasst, um die Position der Bodentraganordnungen (30; 130; 230) in der vertikalen Ebene in Bezug auf den Fahrzeugaufbau (11, 12) zu steuern.

3. Fahrzeug (10) nach Anspruch 2, wobei die Aufhängungsvorrichtung (40; 140; 240) hydraulisch angetriebene Zylinder (60) umfasst, die angeordnet sind, um den vorderen (41; 141; 241) und/oder den hinteren (42; 142; 242) Arm zu steuern, um die vertikale Position der Bodentraganordnungen (30; 130; 230) einzustellen, und die Sensoren Drucksensoren sind, die angeordnet sind, um den hydraulischen Druck in den Zylindern (60) zu messen, um das Gesamtgewicht der Last auf dem Fahrzeug zu bestimmen.

4. Fahrzeug (10) nach Anspruch 2, wobei die Sensoren Sensoren sind, die angeordnet sind, um die Spannung in dem vorderen (41; 141; 241) und dem hinteren (42; 142; 242) Arm zu messen, um das Gesamtgewicht der Last auf dem Fahrzeug zu bestimmen.

5. Fahrzeug (10) nach einem der vorhergehenden Ansprüche, wobei der vordere (41; 141; 241) und der hintere (42; 142, 242) Arm drehbar mit dem Fahrzeugaufbau (11, 12) und dem Tragbalken (31, 131; 232) verbunden sind, um es der Bodentraganordnung (30; 130; 230) zu ermöglichen, sich in der vertikalen Ebene zu bewegen, und mindestens einer von dem vorderen (41; 141; 241) und dem hinteren (42; 142; 242) Arm eine einstellbare Länge aufweist, um es der Bodentraganordnung (30; 130; 230) zu ermöglichen, sich in unterschiedlichen Winkeln in Bezug auf den Fahrzeugaufbau (11, 12) zu bewegen.

6. Fahrzeug (10) nach Anspruch 5, wobei die Sensoren angeordnet sind, um das Moment in der drehbaren Verbindung des vorderen (41; 141; 241) und des hinteren (42; 142; 242) Arms mit dem Fahrzeugaufbau (11, 12) oder dem Tragbalken (31; 131; 231) zu messen, um das Gesamtgewicht der Last auf dem Fahrzeug zu bestimmen.

7. Fahrzeug (10) nach einem der Ansprüche 1 - 5, wobei die Aufhängungsvorrichtung (240) einen oder mehrere bewegliche Zwischenarme (280) umfasst, die zwischen dem vorderen (241) und dem hinteren Arm (242) angeordnet sind und die Bodentraganordnung (240) mit dem Fahrzeugaufbau (11, 12) verbinden, wobei ferner Sensoren angeordnet sind, um die Lasten an dem einen oder den mehreren Zwischenarmen (280) zu bestimmen und die Informationen an die Steuereinheit (70) weiterzuleiten, um das Gewicht der Last zu bestimmen, die auf dem Fahrzeug (10) angeordnet ist.

8. Fahrzeug (10) nach Anspruch 7, wobei die Aufhängungsvorrichtung hydraulisch angetriebene Zylinder umfasst, die angeordnet sind, um den Zwischenarm (280) oder die Arme zu steuern, um die vertikale Position der Bodentraganordnung (240) einzustellen, und die Sensoren Drucksensoren sind, die angeordnet sind, um den hydraulischen Druck in den Zylindern zu messen.

9. Verfahren zum Bestimmen des Gewichts einer Last auf dem Fahrzeug (10) nach Anspruch 1, wobei das Verfahren die Schritte umfasst:
a. Bestimmen eines Referenzwerts für die Informationen von den Sensoren, bevor eine Last auf dem Fahrzeug angeordnet wird;
b. Messen der Last auf der jeweiligen Bodentraganordnung (30; 130; 230) unter Verwendung der Sensoren und Weiterleiten der Informationen an die Steuereinheit (70), die das Gesamtgewicht der Last berechnet, die auf dem Fahrzeug angeordnet ist; und
c. Wiederholen von Schritt b. in bestimmten Zeitabständen, um das Gesamtgewicht zu aktualisieren.

10. Verfahren nach Anspruch 9, ferner umfassend den Schritt:
d. Vergleichen des bestimmten Gesamtgewichts mit einem vorbestimmten maximalen Gewichtswert und Senden einer Warnung, wenn das vorbestimmte maximale Gewicht überschritten wird.

11. Verfahren nach Anspruch 9 oder 10, ferner umfassend den Schritt:
e. Vergleichen des bestimmten Gesamtgewichts mit einem vorbestimmten Referenzwert und Kalibrieren der zulässigen Geschwindigkeit für das Fahrzeug basierend auf dem bestimmten Gewicht.

12. Verfahren nach Anspruch 9, 10 oder 11, ferner umfassend den Schritt:
f. Bestimmen der Bedingungen des umgebenden Bodens und Kalibrieren der zulässigen Geschwindigkeit für das Fahrzeug basierend auf dem bestimmten Gewicht und den Bedingungen des umgebenden Bodens.

## Revendications

1. Véhicule (10) comprenant un dispositif de détermination du poids d'une charge sur le véhicule, ledit véhicule (10) comprenant :
une carrosserie de véhicule (11, 12) ;
au moins deux ensembles de support au sol (30 ; 130 ; 230) conçus pour supporter ladite carrosserie de véhicule (11, 12), chaque ensemble de support au sol comprenant une poutre support (31 ; 131 ; 231) conçue pour supporter au moins deux roues (132 ; 232) ou roues à chenille (32), au moins un pignon (33) et une chenille (34) disposée autour des roues à chenille (32) et du pignon (33) ;
un dispositif de suspension (40 ; 140 ; 240) pour la suspension de chacun desdits ensembles de support au sol (30 ; 130 ; 230) à ladite carrosserie de véhicule (11, 12), ledit dispositif de suspension (40 ; 140 ; 240) étant conçu pour permettre un mouvement de l'ensemble de support au sol (30 ; 130 ; 230) par rapport à la carrosserie de véhicule (11, 12) dans un plan sensiblement vertical s'étendant dans le sens longitudinal dudit ensemble de support au sol (30 ; 130 ; 130) ; le véhicule étant **caractérisé en ce qu'**il comprend en outre
une unité de commande (70),
ledit dispositif de suspension (40 ; 140 ; 240) comprenant
au moins un bras avant (41) et arrière (42) mobile connectant chacun desdits ensembles de support au sol (30 ; 130 ; 230) à la carrosserie de véhicule (11, 12), et
des capteurs conçus pour déterminer les charges sur le bras mobile avant (41 ; 141 ; 241) et arrière (42 ; 142 ; 242) et envoyer des informations à l'unité de commande (70), le poids de la charge du véhicule étant déterminé en se basant sur les informations des capteurs.

2. Véhicule (10) selon la revendication 1, dans lequel le dispositif de suspension (40 ; 140 ; 240) comprend un moyen (60) d'actionnement hydraulique ou électrique du bras avant (41 ; 141 ; 241) et/ou arrière (42 ; 142 ; 242) pour contrôler la position des ensembles de support au sol (30 ; 130 ; 230) dans le plan vertical par rapport à la carrosserie de véhicule (11, 12).

3. Véhicule (10) selon la revendication 2, dans lequel le dispositif de suspension (40 ; 140 ; 240) comprend des cylindres alimentés par système hydraulique (60) conçus pour commander le bras avant (41 ; 141 ; 241) et/ou arrière (42 ; 142 ; 242) pour régler la position verticale des ensembles de support au sol (30 ; 130 ; 230) et lesdits capteurs sont des capteurs de pression conçus pour mesurer la pression hydraulique dans les cylindres (60) afin de déterminer le poids total de la charge sur le véhicule.

4. Véhicule (10) selon la revendication 2, dans lequel lesdits capteurs sont conçus pour mesurer la tension dans le bras avant (41 ; 141 ; 241) et/ou arrière (42 ; 142 ; 242) afin de déterminer le poids total de la charge sur le véhicule.

5. Véhicule (10) selon l'une quelconque des revendications précédentes, dans lequel les bras avant (41 ; 141 ; 241) et/ou arrière (42 ; 142 ; 242) sont connectés de manière à pouvoir tourner à la carrosserie de véhicule (11, 12) et à la poutre support (31, 131 ; 232) afin de permettre à l'ensemble de support au sol (30 ; 130 ; 230) de se déplacer dans le plan vertical et au moins l'un parmi les bras avant (41 ; 141 ; 241) et/ou arrière (42 ; 142 ; 242) a une longueur ajustable afin de permettre à l'ensemble de support au sol (30 ; 130 ; 230) de se déplacer dans différents angles par rapport à la carrosserie de véhicule (11, 12).

6. Véhicule (10) selon la revendication 5, dans lequel lesdits capteurs sont conçus pour mesurer la dynamique dans la connexion rotative du bras avant (41 ; 141 ; 241) et/ou arrière (42 ; 142 ; 242) avec la carrosserie de véhicule (11, 12) ou la poutre support (31, 131 ; 231) afin de déterminer le poids total de la charge sur le véhicule.

7. Véhicule (10) selon l'une quelconque des revendications 1 à 5, dans lequel le dispositif de suspension (40 ; 140 ; 240) comprend un ou plusieurs bras intermédiaires mobiles (280) disposés entre le bras avant (241) et arrière (242) et connectant l'ensemble de support au sol (240) à la carrosserie de véhicule (11, 12), d'autres capteurs étant conçus pour déterminer les charges sur le ou les la prendre de bras intermédiaires (280) et envoyer les informations à l'unité de commande (70) afin de déterminer le poids total de la charge disposée à sur le véhicule.

8. Véhicule (10) selon la revendication 7, dans lequel le dispositif de suspension comprend des cylindres alimentés par système hydraulique conçus pour commander le ou les bras intermédiaires (280) afin de régler la position verticale de l'ensemble de support au sol (240) et lesdits capteurs sont des capteurs de pression conçus pour mesurer la pression hydraulique dans les cylindres.

9. Procédé de détermination du poids d'une charge sur le véhicule (10) selon la revendication 1, ledit procédé comprenant les étapes de :
a. détermination d'une valeur de référence pour les informations provenant des capteurs avant que toute charge soit disposée sur le véhicule ;
b. mesure de la charge sur l'ensemble de support au sol respectif (30 ; 130 ; 230) en utilisant les capteurs et envoi des informations à l'unité de commande (70) qui calcule le poids total de la charge disposée sur le véhicule ; et
c. répétition de l'étape b. à des intervalles temporels sélectionnés afin d'actualiser le poids total.

10. Procédé selon la revendication 9, comprenant en outre l'étape de :
d. comparaison du poids total déterminé avec une valeur de poids maximale prédéterminée et envoi d'une alerte si le poids maximal prédéterminé est dépassé.

11. Procédé selon la revendication 9 ou 10, comprenant en outre l'étape de :
e. comparaison du poids total déterminé avec une valeur de référence prédéterminée et étalonnage de la vitesse permise pour le véhicule en se basant sur le poids déterminé.

12. Procédé selon la revendication 9, 10 ou 11, comprenant en outre l'étape de :
f. détermination des conditions du sol environnant et étalonnage de la vitesse permise pour le véhicule en se basant sur le poids déterminé et les conditions du sol environnant.
